# EUROPÄISCHE PATENTANMELDUNG

(11) **EP 0 827 969 A2**
(43) Veröffentlichungstag der Anmeldung: **11.03.1998**
(21) Anmeldenummer: 97114543.8
(22) Anmeldetag: 22.08.1997
(51) Int. Cl.: C08F 4/02, C08F 4/22, C08F 4/62

(54) **Chrom-Katalysatoren mit mesoporösen Molekularsieben als Träger**

(30) Priorität: 06.09.1996 DE 19636126
(71) Anmelder: BASF AKTIENGESELLSCHAFT, 67056 Ludwigshafen (DE)
(72) Erfinder: Rohde, Wolfgang, Dr., 67346 Speyer (DE); Müller, Ulrich, Dr., 67434 Neustadt (DE)

(57) **Zusammenfassung**

Geträgerter Chromkatalysator zur Polymerisation von α-Olefinen mit einem mesoporösen Molekularsieb als Träger.

## Beschreibung

Gegenstand der vorliegenden Erfindung ist ein geträgerter Chromkatalysator zur Polymerisation von α-Olefinen mit einem mesoporösen Molekularsieb als Träger.

Weiterhin ist Gegenstand der vorliegenden Erfindung ein Verfahren zur Herstellung dieses geträgerten Chromkatalysators sowie ein Verfahren zur Polymerisation von Olefinen in Gegenwart des Katalysators.

Chromkatalysatoren haben zur Polymerisation von Olefinen, insbesondere von Ethylen, weite Verbreitung gefunden. Im allgemeinen werden dazu Chromkatalysatoren auf amorphem Kieselgel als Träger eingesetzt. Üblicherweise erfolgt die Beeinflussung des Polymerisationsgrades des Polyethylens bei diesen Katalysatorsystemen über die Reaktortemperatur bei der Polymerisation und die sogenannte Aktivierungstemperatur bei der Calcinierung der Chrom-Katalysatoren. Reaktortemperatur und Aktivierungstemperatur können nur in gewissen Grenzen variiert werden. Die Grenzen für die Reaktortemperaturen werden von den jeweiligen verfahrenstechnischen Randbedingungen (Wandbelagbildung, Kühlleistung u.a.) festgelegt. Die Aktivierungstemperatur ist dagegen mit weiteren Katalysator- und Produkteigenschaften des Polymerisats verknüpft - etwa der Katalysatorproduktivität oder der Polydispersität des Polymeren (vergl. M.P. McDaniel, Adv. Catal., Bd. 33, S. 65 ff). Wegen dieser Restriktionen ist man stets bemüht, weitere Einflußgrößen zur Steuerung des Polymerisationsgrades der mit Chrom-Katalysatoren gewonnenen Polymerisate zu nutzen. Als eine denkbare Einflußgröße kommt beispielsweise der Porendurchmesser des Trägermaterials in Betracht.

Zur Epoxidierung von Cyclohexen und anderen zyklischen Alkenen wurden Katalysatoren beschrieben, die als Trägermaterial mesoporöse Silikate mit einem Porendurchmesser von 2,5 bis 10 nm enthalten [T. Maschmeyer et al., Nature 378, 159 (1995)].

Der vorliegenden Erfindung lag nun die Aufgabe zugrunde, neue geträgerte Chromkatalysatoren zu finden, deren Trägermaterial einen Einfluß auf das Polymerisatmolekulargewicht, insbesondere hin zu größeren Molekulargewichten, ermöglicht.

Demgemäß wurden die eingangs erwähnten Chromkatalysatoren mit einem mesoporösen Molekularsieb als Träger gefunden. Weiterhin wurde ein Verfahren zur Herstellung dieser geträgerten Chromkatalysatoren sowie ein Verfahren zur Polymerisation von Olefinen in Gegenwart dieser Katalysatoren gefunden.

Unter mesoporösen Molekularsieben sind dabei anorganische Strukturen zu verstehen, die durch ihre wenigstens zum Teil regelmäßige Struktur weitgehend gleichförmige Poren mit weitgehend gleichen Porendurchmessern im Bereich von etwa 1,5 bis 25 nm aufweisen. Beispiele von mesoporösen Molekularsieben werden z.B. von C.T. Kresge et al. in Nature, 359, 710 (1992) sowie in US-A-505 72 96 und DE-A-440 73 26 beschrieben.

Das Gerüst des Molekularsiebs kann verschiedene Elemente, vorzugsweise Oxide der Elemente Si, Be, B, Al, Ga, In, Sn, Pb, Bi, Ti, Zr, Hf, V, Nb, Ta, Cr, Mo, W, Mn, Fe, Co, Ni, Cu, Zn, Cd, Hg und/oder Ce enthalten. Die Oxide dieser Elemente können allein oder in Mischungen am Aufbau der Gerüststruktur beteiligt sein.

Besonders bevorzugt sind solche Trägermaterialien, die eine Alumosilikatstruktur, insbesondere eine Silikatstruktur aufweisen, d.h. Trägermaterialien, die im wesentlichen aus SiO₂ bzw. Mischungen aus SiO₂ und Al₂O₃ aufgebaut sind.

Die im Gegensatz zum amorphen Kieselgel regelmäßige Struktur der Molekularsiebe kann z.B. dadurch erreicht werden, daß beim Aufbau des Molekularsiebgerüstes neben den gewünschten Metallsalzen anionische oder kationische Tenside anwesend sind. Durch die Auswahl der Tensidverbindungen kann der Porendurchmesser der Molekularsiebe beeinflußt werden. Bevorzugt sind mesoporöse Molekularsiebe mit einem Porendurchmesser von 1,5 bis 25 nm, besonders bevorzugt solche mit einem Porendurchmesser von 2 bis 5 nm.

Besonders zur Herstellung von mesoporösen Molekularsieben mit Silikat- und Alumosilikatstruktur eignen sich z.B. kationische Tenside wie Hexadecyltrimethylammoniumsalze. Beispiele für die Herstellung solcher Molekularsiebe werden in (US-A-505 72 96) beschrieben.

Die Herstellung mesoporöser Molekularsiebe mit Hilfe anionischer Tenside wird beispielsweise in EP-A-670 286 beschrieben, auf deren gesamten Inhalt hier ausdrücklich Bezug genommen wird.

Das Trägermaterial kann vor der Dotierung mit den Chromverbindungen calciniert werden, wobei im allgemeinen Temperaturen zwischen 400 und 1200 °C angewendet werden. Auf diese Weise können organische Verunreinigungen entfernt und die Oberflächenhydrophilie des Trägers eingestellt werden.

Der gewünschtenfalls calcinierte Träger wird dann mit der chromhaltigen Aktivkomponente bzw. deren Vorstufe dotiert.

Die erfindungsgemäßen Chromkatalysatoren haben vorzugsweise einen Chromanteil von 0,1 bis 10 Gew.-%, besonders bevorzugt von 0,5 bis 5 Gew.-%, bezogen auf die Gesamtmasse des Katalysators.

Neben der chromhaltigen Aktivkomponente kann das Trägersystem des erfindungsgemäßen Katalysators noch mit weiteren Dotierstoffen beladen werden. Als solche Dotierstoffe kommen z.B. Verbindungen des Bors, des Fluors, des Aluminiums, des Siliciums, des Phosphors und des Titans in Betracht. Diese Dotierstoffe werden vorzugsweise gemeinsam mit den Chromverbindungen auf den Träger aufgebracht, können jedoch auch in einem getrennten Schritt vor oder nach der Chrombeladung auf den Träger aufgebracht werden.

Die großen Porenweiten der mesoporösen Molekularsiebe erlauben auch die zusätzliche Beladung mit Cokatalysatormolekülen. Als Cokatalysatoren eignen sich unter anderem Hydride und Alkylverbindungen von Hauptgruppenelementen sowie des Zinks.

Ein Verfahren zur Herstellung des erfindungsgemäßen geträgerten Chromkatalysators ist dadurch gekennzeichnet, daß man ein mesoporöses Molekularsieb in einem Lösungsmittel mit einer Chromverbindung in Kontakt bringt, das Lösungsmittel entfernt und den Katalysator bei einer Temperatur von 400 bis 1200°C calciniert. Das Molekularsieb kann dazu in einem Lösungsmittel oder auch in einer Lösung der Chromverbindung suspendiert werden.

Die Dotierung des Katalysatorträgers mit der chromhaltigen Aktivkomponente bzw. den o.g. Elementen und/oder Cokatalysatoren erfolgt vorzugsweise aus einer Lösung oder bei flüchtigen Verbindungen aus der Gasphase. Geeignete Chromverbindungen sind Chrom(VI)oxid, Chromsalze, wie z.B. Chrom(III)nitrat, Chrom(III)acetat, Komplexverbindungen, wie Chrom(III)acetylacetonat oder Chromhexacarbonyl, oder auch metallorganische Verbindungen des Chroms, wie Bis(cyclopentadienyl)chrom(II), organische Chrom(VI)säureester oder Bis(aren)chrom(0).

Als Lösungsmittel für die Trägerdotierung eignen sich beispielsweise Wasser, Alkohole, Ketone, Ether, Ester und Kohlenwasserstoffe.

Die Konzentration der Dotierlösung beträgt im allgemeinen 0,1 - 200 g Chromverbindung/l Lösungsmittel, bevorzugt 1 - 50 g/l.

Das Gewichtsverhältnis der Chromverbindungen zum Träger während der Beladung beträgt im allgemeinen von 0,001 : 1 bis 200 : 1, vorzugsweise von 0,005 : 1 bis 100 : 1.

Nach der Dotierung des Trägers wird die trockene Katalysatorvorstufe beispielsweise in einem Wirbelschichtreaktor in einer oxidierenden, sauerstoffhaltigen Atmosphäre bei Temperaturen zwischen 400 und 1200°C calciniert. Die Abkühlung erfolgt vorzugsweise unter einer Inertgasatmosphäre, um die Adsorption von Sauerstoff auszuschließen. Diese Calcinierung läßt sich auch in Gegenwart von Fluorverbindungen wie z.B. dem Ammoniumhexafluorosilikat ausführen, wodurch die Katalysatoroberfläche mit Fluoratomen modifiziert wird.

Nach dieser Aktivierung unter oxidierenden Bedingungen, können die Katalysatoren einer Reduktion unterworfen werden. Geeignete Reduktionsmittel sind beispielsweise Kohlenmonoxid und Wasserstoff, welche allgemein im Temperaturbereich zwischen 200 und 1200°C eingesetzt werden können, oder aber auch organische Verbindungen wie ungesättigte Kohlenwasserstoffe oder Aldehyde.

Als organische Verbindungen für die Reduktion des oxidativ hergestellten Phillips-Katalysators kommen beispielsweise lineare C₄-bis C₁₀- oder cyclische C₃- bis C₁₀-Alkene mit mindestens einer internen C=C-Doppelbindung, 1,3-Butadien, C₂- bis C₁₀-Alkine oder C₁- bis C₁₀-Aldehyde in Betracht.

Als interne C=C-Doppelbindungen werden dabei solche bezeichnet, in denen beide C-Atome mit mindestens einem weiteren C-organischen Rest substituiert sind.

Die jeweilige, für die Stoffgruppe der organischen Reduktionsmittel charakteristische funktionelle Gruppe kann in einem Molekül auch mehrfach enthalten sein; dies gilt zum Beispiel für Diene und Polyene. Weiterhin sind auch Verbindungen geeignet, welche verschiedene funktionelle Gruppen tragen, beispielsweise olefinisch oder acetylenisch ungesättigte Aldehyde oder olefinisch substituierte Alkine.

Des weiteren sind auch Stoffmischungen der jeweiligen Reinsubstanzen geeignet, zum Beispiel Alkin/Alken, Alken/Aldehyd, Alkin/Aldehyd.

Weitere Details zur Reduktion des Katalysators mit organischen Verbindungen sind in der älteren deutschen Patentanmeldung Nr. 19 543 294.0 beschrieben.

Die erfindungsgemäßen Katalysatoren lassen sich vorteilhaft in Verfahren zur Polymerisation von α-Olefinen bei einem Druck zwischen 100 und 10000 kPa und einer Temperatur von 10 bis 150°C einsetzen.

Der Druck beträgt im allgemeinen 100 bis 10000 kPa, vorzugsweise 1000 bis 6000 kPa und die Temperatur liegt im allgemeinen im Bereich von 10 bis 150°C, vorzugsweise im Bereich von 30 bis 125°C.

Die erfindungsgemäßen Katalysatoren eignen sich sehr gut für die Polymerisation von α-Olefinen, vorzugsweise C₂- bis C₁₀-Alk-1-enen wie Ethylen, Propen, 1-Buten, 1-Penten, 1-Hexen, 1-Hepten, 1-Octen, 1-Nonen oder 1-Decen.

Insbesondere kann Ethylen homopolymerisiert oder mit C₃- bis C₁₀-Alk-1-enen copolymerisiert werden, so zum Beispiel mit Propen, 1-Buten, 1-Hexen, 1-Octen oder 1-Decen oder Mischungen dieser Comonomeren, wobei das Mischungsverhältnis für die Wirksamkeit des Katalysators nicht kritisch ist.

Die Polymerisationen der Alk-1-ene können nach den üblichen, für die Polymerisation von Olefinen bekannten Verfahren, wie Lösungsverfahren, Suspensionsverfahren, gerührte Gasphase oder Gasphasenwirbelschichtverfahren, kontinuierlich oder auch diskontinuierlich, durchgeführt werden. Als Lösungsmittel oder Suspensionsmittel können inerte Kohlenwasserstoffe, wie iso-Butan, oder aber die Monomeren selbst verwendet werden.

Besonders gut geeignete Verfahren zur Herstellung der erfindungsgemäßen Polymeren sind das Suspensionsverfahren und das Gasphasenwirbelschichtverfahren.

Zur weiteren Steuerung der Molekulargewichte kann vorteilhaft Wasserstoff als Reglersubstanz bei der Polymerisation eingesetzt werden. Es hat sich als vorteilhaft erwiesen, die Polymerisation der Alk-1-ene mit den erfindungsgemäßen reduzierten Katalysatoren in Gegenwart von Organometallverbindungen der ersten, zweiten, dritten oder vierten Hauptgruppe oder der zweiten Nebengruppe des Periodensystems der Elemente durchzuführen. Diese Verbindungen können entweder dem Polymerisationsgemisch zugegeben werden, oder sie können wie oben beschrieben direkt auf das Trägermaterial aufgegeben werden. Gut geeignete derartige Verbindungen sind homoleptische C₁- bis C₁₀-Alkyle des Lithiums, Bors, Aluminiums oder Zinks wie n-Butyllithium, Triethylbor, Triethylaluminium, Triisobutylaluminium, Trihexylaluminium, Trioctylaluminium und Diethylzink. Ferner sind auch noch C₁- bis C₁₀-Dialkylaluminiumalkoxide wie Diethylaluminiumethoxid gut geeignet. Besonders bevorzugt ist n-Butyllithium als Organometallverbindung. Auch Mischungen der oben beschriebenen Organometallverbindungen sind im allgemeinen gut geeignet, wobei das Mischungsverhältnis nicht kritisch ist.

Das molare Verhältnis Organometallverbindung:Chrom liegt üblicherweise im Bereich von 0,1:1 bis 50:1, vorzugsweise im Bereich von 1:1 bis 50:1.

Eine weitere Anwendung der erfindungsgemäßen Katalysatoren besteht in der Möglichkeit, diese Katalysatoren entweder miteinander oder mit anderen Katalysatoren auf der Basis von amorphen Trägermaterialien zu kombinieren. Hierbei kommt der Vorteil, die Molmasse des entstehenden Polymeren unabhängig von den Aktivierungs- und Polymerisationsbedingungen über den mittleren Poren - durchmesser des Trägers kontrollieren zu können, besonders zum Tragen. So können nicht nur mittlere Molmassen, sondern auch Molmassenverteilungen über die Zusammensetzung eines Katalysatorgemisches eingestellt werden.

Die mit den erfindungsgemäßen Katalysatorsystemen erhältlichen Polymerisate von Alk-1-enen haben im allgemeinen hohe Molekulargewichte Mw. Sie lassen sich vorteilhaft zu Folien und Formkörpern weiterverarbeiten.

### Beispiele

### Beispiel 1

### Herstellung eines mesoporösen Molekularsiebs als Träger

84 g Tetraethoxysilan wurden in einer Mischung aus 24,4 g Isopropanol und 120 g Ethanol gelöst. Zu der Losung wurde bei 25°C ein Gemisch aus 20 g Laurylamin und 2,92 g Salzsäure (10 gew.-%ige Lösung) in 260 ml Wasser getropft. Die entstehende Suspension wurde 20 Stunden bei 25°C gerührt. Dann wurde der Niederschlag abfiltriert, mit Wasser neutral gewaschen, bei 60°C getrocknet und bei 500°C für 5 Stunden calciniert.
Spezifische Oberfläche (Langmuir): 1220 m²/g
Porenvolumen: 0,83 ml/g
Mittlerer Porendurchmesser: 2,8 nm
Röntgenbeugung: Signale bei 18,84 und 37,65 nm

### Beispiel 2

### Herstellung des geträgerten Chromkatalysators

Zur Herstellung des Phillips-Katalysators wurden 10 g des in Beispiel 1 beschriebenen Trägers zu einer Lösung von 412 mg Cr(NO₃)₃·9H₂O in 100 ml Methanol gegeben. Die Suspension wurde noch eine Stunde bei Raumtemperatur gerührt. Anschließend wurde das Methanol im Rotationsverdampfer im Vakuum bei Raumtemperatur abgezogen. Das so hergestellte Material besaß einen Chromgehalt von 1 Gew-%. Diese Katalysatorvorstufe wurde in einem kleinen Quarzglas-Wirbelschichtofen bei 750°C im Luftstrom calciniert. Dazu wurde das Material zunächst innerhalb von 1 Std. im Argongasstrom (50 l/h) auf 200°C erhitzt und bei dieser Temperatur 2 Std. belassen. Sodann wurde die Temperatur innerhalb von 1 Std. auf 750°C erhöht, wobei ab 350°C der Gasstrom von Argon auf Luft umgestellt wurde. Nach 2 Std. bei 750°C wurde die Heizung abgeschaltet und der Katalysator innerhalb von 5 Std. auf Raumtemperatur abgekühlt, wobei ab 350°C wieder auf Argongas umgestellt wurde.

Nichterfindungsgemäßes Vergleichsbeispiel:

Entsprechend der in EP-A-0 429 937 beschriebenen Herstellweise (Beispiele 1 und 2) wurde ein Phillipskatalysator auf amorphem Kieselgel als Träger hergestellt.
Spezifische Oberfläche: 470 m²/g
Porenvolumen: 0,84 ml/g

### Beispiel 3

### Polymerisation von Ethylen

Die oben beschriebenen Katalysatoren wurden in einem 1 l-Laborautoklaven zur Polymerisation von Ethylen eingesetzt. Dazu wurde der Autoklav bei einer Temperatur von 90°C mit 500 ml Isobutan gefüllt. In diese Flüssigkeit wurden 30 mg n-Butyllithium, gelöst in 3 ml Heptan, eingetragen. Sodann wurde Ethylen bis zu einem Gesamtdruck von 40 bar aufgepreßt. Die Ethylenkonzentration in der flüssigen Phase betrug dann ca. 26 mol%. Über ein Schleusensystem wurde schließlich der jeweilige Katalysator in den Reaktor eindosiert. Die Polymerisation erfolgte über 90 Minuten, wobei der Gesamtdruck im Reaktor durch kontinuierliches Nachdosieren von Ethylen auf 40 bar gehalten wurde. Die in Tab. 1 gezeigten Ergebnisse belegen, daß trotz gleicher Aktivierungstemperatur der Katalysatoren, gleicher Porenvolumina der Träger und gleicher Reaktortemperatur während der Polymerisation, im Falle des erfindungsgemäßen Katalysators eine wesentlich höhere Molmasse, ausgedrückt durch den Staudingerindex des Polymeren, gemessen nach DIN 53733, resultiert.

**Tabelle 1**

| Polymerisation von Ethylen | | | | |
|---|---|---|---|---|
| Katalysator | Katalysatoreinwaage (mg) | Polymerauswaage (g) | Produktivität (g/mmol Cr·h) | Staudingerindex (ml/g) |
| gemäß Beispiel 2 | 200 | 17 | 295 | 953 |
| Vergleichskat. | 80 | 250 | 10800 | 687 |

### Beispiel 4

### Copolymerisation eines Ethylen/1-Hexen-Gemisches

Die Polymerisation mit den oben beschriebenen Katalysatoren erfolgte unter den in Beispiel 3 beschriebenen Bedingungen, zusätzlich wurden aber jeweils 20 ml 1-Hexen in den Reaktor eindosiert. Die Ergebnisse der Tab. 2 zeigen wiederum, daß der erfindungsgemäße Katalysator ein Copolymer mit deutlich höherer Molmasse liefert. In den Polymerproben lassen sich mit Hilfe der IR-Spektroskopie jeweils ca. 1,1 Gew.% Hexen als Comonomer nachweisen.

**Tabelle 2**

| Copolymerisation eines Ethylen/1-Hexen-Gemisches | | | | |
|---|---|---|---|---|
| Katalysator | Katalysatoreinwaage (mg) | Polymerauswaage (g) | Produktivität (g/mmol Cr·h) | Staudingerindex (ml/g) |
| gemäß Beispiel 2 | 231 | 51 | 765 | 859 |
| Vergleichskat. | 70 | 256 | 12680 | 526 |

## Patentansprüche

1. Geträgerter Chromkatalysator zur Polymerisation von α-Olefinen mit einem mesoporösen Molekularsieb als Träger.

2. Geträgerter Chromkatalysator nach Anspruch 1, wobei das mesoporöse Molekularsieb Oxide der Elemente Si, Be, B, Al, Ga, In, Sn, Pb, Bi, Ti, Zr, Hf, V, Nb, Ta, Cr, Mo, W, Mn, Fe, Co, Ni, Cu, Zn, Cd, Hg und/oder Ce enthält.

3. Geträgerter Chromkatalysator nach Anspruch 1, wobei das mesoporöse Molekularsieb eine Alumosilikatstruktur aufweist.

4. Geträgerter Chromkatalysator nach Anspruch 1, wobei das mesoporöse Molekularsieb eine Silikatstruktur aufweist.

5. Geträgerter Chromkatalysator nach Anspruch 1, wobei das mesoporöse Molekularsieb Mesoporen mit einem Porendurchmesser von 1,5 bis 25 nm enthält.

6. Geträgerter Chromkatalysator nach Anspruch 1 mit einem Chromanteil von 0,1 bis 10 Gew-%, bezogen auf die Gesamtmasse des Katalysators.

7. Verfahren zur Herstellung eines geträgerten Chromkatalysators gemäß Anspruch 1, dadurch gekennzeichnet, daß man ein mesoporöses Molekularsieb in einem Lösungsmittel mit einer Chromverbindung in Kontakt bringt, das Lösungsmittel entfernt und den Katalysator bei einer Temperatur von 400 bis 1200°C calciniert.

8. Verfahren zur Polymerisation von α-Olefinen bei einem Druck zwischen 100 und 10000 kPa und einer Temperatur zwischen 10 und 150°C, dadurch gekennzeichnet, daß die Polymerisation in Gegenwart eines geträgerten Chromkatalysators gemäß Anspruch 1 vorgenommen wird.

9. Verfahren zur Polymerisation von α-Olefinen gemäß Anspruch 8, dadurch gekennzeichnet, daß als Cokatalysatoren Organometallverbindungen von Metallen der 1. bis 4. Hauptgruppe oder der 2. Nebengruppe des Periodensystems eingesetzt werden.
